# EUROPÄISCHE PATENTANMELDUNG

(11) **EP 4 411 639 A1**
(43) Veröffentlichungstag der Anmeldung: **07.08.2024**
(21) Anmeldenummer: 24154484.0
(22) Anmeldetag: 29.01.2024
(51) Int. Cl.: G06T 7/55

(54) **VERFAHREN ZUR 3D-REKONSTRUKTION EINES KANALBAUWERKES SOWIE KANALBAUWERKINSPEKTIONSSYSTEM**

(30) Priorität: 03.02.2023 DE 102023200900
(71) Anmelder: IBAK Helmut Hunger GmbH & Co. KG, 24148 Kiel (DE)
(72) Erfinder: Böttcher, Marcus, 24148 Kiel (DE); Heinze, Christan, 24148 Kiel (DE); Angerer, Benjamin, 24148 Kiel (DE); Brünger, Johannes, 24148 Kiel (DE); Dannenberg, Jonathan, 24148 Kiel (DE)
(74) Vertreter: Patentanwälte Hemmer Lindfeld Frese Partnerschaft mbB

(57) **Zusammenfassung**

Die Erfindung betrifft Verfahren zur 3D-Rekonstruktion eines Kanalbauwerkes (2) aus aufgenommenen Bildern, bei welchem ein Inspektionsgerät (4), welches zumindest eine Kamera (8, 10) aufweist, durch das Kanalrohr (2) oder den Schacht bewegt wird, von der zumindest einen Kamera (8, 10) in Intervallen Bilder in zumindest zwei einander abgewandten und definiert beabstandeten Kameraposen aufgenommen werden, und aus den aufgenommen Bildern ein 3D-Bildmodell des Kanalbauwerkes (2) rekonstruiert wird, wobei das 3D-Bildmodell auf Grundlage des vorbekannten Abstandes (d) der beiden Kameraposen skaliert wird, sowie ein Kanalrohrinspektionssystem, welches zur Ausführung dieses Verfahrens ausgebildet ist.

## Beschreibung

Die Erfindung betrifft ein Verfahren zur 3D-Rekonstruktion, d.h. zum Erzeugen eines 3D-Bildmodelles eines Kanalbauwerkes wie zum Beispiel eines Kanalrohres oder eines Schachtes, sowie ein hierzu geeignetes Kanalbauwerkinspektionssystem.

Es sind Kanalbauwerk- bzw. Kanalrohrinspektionssysteme bekannt, welche dazu dienen, Kanalbauwerke wie Kanalrohre und/oder Schächte zu untersuchen. Dabei sind Systeme bekannt, welche in einem Kanalbauwerk, d.h. zum Beispiel im Kanalrohr bzw. in einem Schacht eine Vielzahl von Bildern aufnehmen, welche im Anschluss im Rahmen einer 3D-Rekonstruktion zu einem 3D-Bildmodell so zusammengefügt werden, dass eine dreidimensionale Betrachtung in einem virtuellen 3D-Bildmodell möglich wird. Bei diesen 3D-Bildmodellen besteht das Problem der Skalierung, d.h. Größenverhältnisse richtig zu erfassen.

Im Hinblick auf diese Problematik ist es Aufgabe der Erfindung, ein Verfahren zur 3D-Rekonstruktion eines Kanalbauwerkes wie eines Kanalrohres oder eines Schachtes sowie ein hierfür geeignetes Kanalbauwerkinspektionssystem bereitzustellen, welche es auf einfache Weise ermöglichen, ein 3D-Bildmodell korrekt zu skalieren.

Diese Aufgabe wird gelöst durch ein Verfahren mit den in Anspruch 1 angegebenen Merkmalen sowie durch ein Kanalbauwerkinspektionssystem mit den in Anspruch 11 angegebenen Merkmalen. Bevorzugte Ausführungsformen ergeben sich aus den zugehörigen Unteransprüchen, der nachfolgenden Beschreibung sowie den beigefügten Figuren.

Das erfindungsgemäße Verfahren dient dazu, eine 3D-Rekonstruktion eines Kanalbauwerkes wie zum Beispiel eines Kanalrohres oder Schachtes aus Bildern vorzunehmen, welche in diesem Kanalbauwerk Kanalrohr oder Schacht aufgenommen wurden. D.h. das Verfahren dient dazu, aus einer Vielzahl von aufgenommenen Bildern ein 3D-Bildmodell zu erstellen. Das 3D-Bildmodell stellt ein Punktewolke dar, welche zum Beispiel mit Kl-gestützten Verfahren aus den aufgenommenen Bildern erzeugt werden kann. Zum Aufnehmen der Bilder ist ein Inspektionsgerät vorhanden, welches zumindest eine Kamera und vorzugsweise zwei Kameras aufweist, die es ermöglichen, Bilder in zumindest zwei definiert beabstandeten Kameraposen mit voneinander abgewandte Blickrichtungen aufzunehmen. Die Kamerapose definiert die Kameraposition und Kameralage bei der Bildaufnahme. Die voneinander abgewandten Blickrichtungen sind vorzugsweise entgegengesetzt gerichtet, sodass ihre zentralen optischen Achsen, d.h. die Mittelachsen der Blickrichtungen der beiden Kameraposen bzw. Kameras einen Winkel von 180 Grad zueinander aufweisen. Bei den zwei Kameras kann es sich vorzugsweise um Kameras mit Fisheye-Objektiven handeln, welche jeweils einem Blickwinkel von wenigstens 180 Grad aufweisen. So kann mit beiden Kameras gemeinsam ein 360 Grad Blickwinkel bzw. Blickfeld realisiert werden. Wenn lediglich eine Kamera verwendet wird, kann diese beispielsweise definiert verschwenkt werden.

Der definierte Abstand zwischen den Kameraposen kann durch eine feste räumliche Anordnung zweier Kameras vorgegeben sein. Alternativ kann der Abstand messtechnisch erfasst werden oder durch eine Steuerung, welche eine oder mehrere Kameras steuert, um die gewünschten Kameraposen zu erreichen, vorgegeben werden. Dabei kann sich der definierte Abstand beispielsweise durch die mechanische Konstruktion eines Antriebes, beispielsweise Übersetzungsverhältnisse, Hebellängen oder Ähnliches, beispielsweise bei einem Schwenkantrieb ergeben.

Das Inspektionsgerät kann als ein lediglich beobachtendes Gerät ausgebildet sein, aber beispielsweise auch als ein Gerät, welches Spül- oder Reinigungseinrichtungen oder Werkzeuge trägt, d.h. als Sanierungsgerät ausgebildet sein.

Das Inspektionsgerät wird durch das Kanalbauwerk, z.B. das Kanalrohr oder den Schacht bewegt, wobei von der oder den Kameras in zeitlichen oder räumlichen Intervallen Bilder aufgenommen werden. Im Anschluss wird aus den aufgenommenen Bildern ein 3D-Bildmodell des Kanalbauwerkes rekonstruiert, indem die einzelnen Bilder zu einem dreidimensionalen Gesamtbild zusammengesetzt werden, sodass ein virtuelles Modell des Kanalbauwerkes geschaffen wird.

Um in diesem virtuellen 3D-Bildmodell Abstände und Maße richtig bestimmen zu können, ist es erforderlich, dass das Bildmodell richtig skaliert wird. Hierzu ist eine Referenzstrecke erforderlich, um auf Grundlage dieses Referenzmaßes das Gesamtmodell entsprechend skalieren zu können. Erfindungsgemäß wird als ein solches Referenzmaß bzw. eine solche Referenzstrecke der vorbestimmte Abstand zwischen den zwei Kameras genutzt. Der vorbestimmte Abstand der Kameraposen ergibt sich vorzugsweiseaus der Konstruktion des Inspektionsgerätes und kann sehr genau vordimensioniert und ggf. auch sehr genau vermessen werden. Wenn zwei Kameras vorhanden sind, kann dieser Abstand der konstruktiv vorgegebene Abstand der beiden Kameras sein. Wird stattdessen eine schwenkbare Kamera verwendet, bei welcher die beiden Kameraposen durch Verschwenken erreicht werden, ergibt sich der Abstand beispielsweise aus dem konstruktiven Aufbau der Schwenkmechanik. Dieser vorbekannte Abstand der Kameraposen bzw. der vorbekannte Kameraabstand kann dann bei der 3D-Rekonstruktion, bei welcher das virtuelle dreidimensionale Bildmodell erzeugt wird, der Skalierung zugrunde gelegt werden, d.h. alle geometrischen Beziehungen in dem Modell können auf Grundlage dieses vorbekannten Abstandes skaliert und somit genau bestimmt werden. Auf diese Weise kann auf zusätzliche Messsysteme, welche das Kanalrohr oder den Schacht zusätzlich zur Aufnahme der Bilder vermessen, verzichtet werden oder es kann die Genauigkeit solcher Messsysteme durch die zusätzliche Skalierung der Bildinformationen auf Grundlage des vorbekannten Kameraabstandes erhöht werden.

Das Inspektionsgerät ist vorzugsweise so ausgebildet und wird vorzugsweise so durch das Kanalbauwerk, wie ein Kanalrohr bzw. einen Schacht bewegt, dass die zentralen optischen Achsen der Kameraposen bzw. der sie aufnehmenden Kameras, d.h. die Mittelachsen der Kameraposen bzw. Blickwinkel der Kameras bei der Bewegung des Inspektionsgerätes parallel zur Vorschubrichtung gelegen sind. D.h., wenn die Kameraposen in entgegengesetzt gerichtet sind bzw. die Kameras in entgegengesetzte Richtungen blicken, ist eine Kamerapose in Vorschubrichtung nach vorne gerichtet, während die andere Kamerapose in Vorschubrichtung nach hinten gerichtet ist. So kann beim Vorschub das gesamte Kanalbauwerk, z.B. ein Kanalrohr aus zwei entgegengesetzten Blickrichtungen aufgenommen werden.

Besonders bevorzugt werden die zwei Kameraposen bzw. die Bilder von beiden Kameras in den zeitlichen oder räumlichen Intervallen jeweils gleichzeitig aufgenommen. Dies ist wesentlich, um den Abstand der Kameraposen bzw. Kameras bei der Skalierung des 3D-Modells nutzen zu können. So wird sichergestellt, dass stets zwei Bilder gleichzeitig mit einem vorbestimmten Abstand zwischen den beiden Kameraposen bzw. Kameras aufgenommen werden. So sind vorzugsweise zwei Kameras mit einander abgewandten Kameraposen oder Blickrichtungen in definiertem Abstand zueinander an einem gemeinsamen Inspektionsgerät angeordnet und die beiden Kameras werden so angesteuert, dass sie zeitgleich Bilder aufnehmen. Das genaue Maß zwischen den beiden Kameras und den aufgenommenen Bildern kann dann bei der Skalierung der geometrischen Beziehungen im Bildmodell genutzt werden. Wenn nur eine Kamera zum Erzeugen der beiden Kameraposen verwendet wird, ist es wesentlich, dass die Kamera um ein definiertes Maß bewegt wird, z.B. das Inspektionsgerät stillsteht und lediglich die Kamera über eine Schwenkmechanik definiert verschwenkt wird.

Gemäß einer weiteren möglichen Ausgestaltung des Verfahrens kann eine vorbekannte oder bei der Bildaufnahme erfasste Winkellage der zentralen optischen Achsen der Kamera oder der beiden Kameras bei der Skalierung berücksichtigt werden. Die Winkellage kann beispielsweise durch zumindest ein geeignetes Winkelmesssystem oder Lagesensoren erfasst werden. Dabei kann es sich um die Winkellage zwischen den optischen Achsen der Kameraposen bzw. der beiden Kameras handeln, wobei diese vorzugsweise, wie vorangehend beschrieben wurde, 180 Grad beträgt. Wenn eine oder mehrere schwenkbare Kameras verwendet werden, kann die Winkellage zwischen den optischen Achsen der Kameras sich ändern und auf diese Weise erfasst und diese Information anschließend bei der 3D-Rekonstruktion und Skalierung genutzt werden. Auch kann es sich bei der Winkellage um die Winkellage der beiden optischen Achsen relativ zur Vorschubrichtung bzw. zur Längsachse eines Kanalrohrs handeln. Eine solche Winkellage kann sich beispielsweise ändern, wenn sich die Lage des Inspektionsgerätes im Kanalrohr ändert. Solche Lageänderungen können durch geeignete Beschleunigungs- und/oder Lagesensoren erfasst werden und ebenfalls bei der Bildauswertung und 3D-Rekonstruktion sowie Skalierung genutzt werden.

Für die Rekonstruktion des 3D-Bildmodelles werden vorzugsweise in den aufgenommenen Bildern korrespondierende Bildpunkte oder Bildinhalte erkannt bzw. erfasst und die einzelnen Bilder, welche zuvor in den verschiedenen Kameraposen bzw. von den beiden Kameras in den Intervallen aufgenommen wurden, werden anhand der erkannten und in mehreren Bildern korrespondierenden Bildpunkte oder Bildinhalte zu einem 3D-Bildmodell zusammengefügt. So wird eine Punktewolke gebildet. Zur Modellerzeugung können verschiedene, auch KI-gestützte Verfahren zum Einsatz kommen. Beispielsweise könnte ein "structure from motion" Verfahren oderSLAM-Verfahren (Simultaneous Localization and Mapping) Verwendung finden. Die Bildinhalte bzw. Bildpunkte können charakteristische Bildpunkte bzw. Bildinhalte sein, welche z.B. Kanten, sich aus der Struktur einer Rohrwandung ergebenden Bildinhalte oder sonstige Objekte im Bild sein können. Es sind Verfahren der Bildauswertung bekannt, mit welchen solche charakteristischen oder markanten Bildinhalte bzw. Bildpunkte erkannt und wiedererkannt werden können, sodass sie in verschiedenen Bildern aufgefunden werden können und die Bilder dann basierend auf diesen korrespondierenden Punkten, welche sich in mehreren Bildern finden, zu einem dreidimensionalen Modell zusammengesetzt werden können. Die geometrischen Beziehungen zwischen einzelnen Bildpunkten oder Bildobjekten definieren dabei die dreidimensionale Struktur bzw. das dreidimensionale Modell des Kanalrohres. Diese geometrischen Beziehungen werden auf Grundlage des vorbekannten Abstandes der zwei Kameras skaliert, sodass aus diesen geometrischen Beziehungen absolute Maße aus dem Bild abgeleitet werden können.

Die Skalierung kann vorzugsweise in der Weise erfolgen, dass in den Bildern eine Wolke von Bildpunkten mit den relativen geometrischen Beziehungen zwischen den Bildpunkten ermittelt wird. Für diese Wolke wird zunächst ein willkürlicher Maßstab oder Ausgangs-Maßstab angesetzt und auf Grundlage dieses Maßstabes der Abstand zwischen den beiden Kameraposen bzw. Kameras berechnet. Dieser berechnete Abstand wird anschließend mit dem vorbekannten Abstand verglichen und im Anschluss wird die Wolke von Bildpunkten so skaliert, dass der rechnerisch ermittelte Wert für den Abstand der Kameraposen dem tatsächlichen Wert, d.h. dem vorbekannten Abstand der Kameraposen entspricht. Auf diese Weise können dann absolute Maße für die geometrischen Beziehungen zwischen einzelnen Bildobjekten oder Bildpunkten ermittelt werden und das gesamte 3D-Bildmodellen maßstabsgetreu skaliert werden.

Das Inspektionsgerät kann so ausgebildet sein, dass es mittels angetriebener Räder durch das Kanalbauwerk, wie z.B. ein Kanalrohr bewegt wird. So kann das Inspektionsgerät als Fahrwagen ausgebildet sein. Zur Schachtuntersuchung kann eine Hängevorrichtung, an welcher das Inspektionsgerät hängt, verwendet werden. So kann z.B. eine Winde vorgesehen sein, mittels der das Inspektionsgerät an einem Seil, einer Kette, einem Stab o.ä. in den Schacht herabgelassen werden kann. Alternativ kann das Inspektionsgerät an einem Schiebestab angeordnet sein, mit welchem es z.B. in einem Kanalrohr oder Schacht vorgeschoben und auch wieder zurückgezogen werden kann. In weiterer alternativer Ausgestaltung kann das Inspektionsgerät schwimmend oder fliegend und/oder schwebend ausgebildet sein, beispielsweise nach Art einer Drohne, um durch ein Kanalrohr oder einen Schacht fliegen zu können. Zur schwebenden Ausgestaltung können Auftriebselemente an oder in dem Inspektionsgerät vorgesehen sein, um dieses beispielsweise nach Art eines Luftschiffs auszugestalten. Zum Vor- und Zurückbewegen können Propeller vorgesehen sein.

In einer weiteren möglichen Ausgestaltung des erfindungsgemäßen Verfahrens kann bei der Bewegung des Inspektionsgerätes eine Wegmessung erfolgen und die über die Wegmessung bestimmte Position der Kameraposen bzw. Kameras im Moment der Aufnahme eines Bildes registriert und im Anschluss bei der Rekonstruktion und/oder Skalierung des 3D-Bildmodells berücksichtigt werden. Über eine solche Wegmessung bzw. zusätzliche Positionsbestimmung kann ggf. eine höhere Genauigkeit der Skalierung erreicht werden. Eine solche Wegmessung kann beispielsweise durch Radsensoren an einem Fahrwagen erfolgen, welche die Umdrehung der Räder erfassen, sodass auf Grundlage der Anzahl der Umdrehungen bei bekanntem Radumfang der zurückgelegte Weg bestimmt werden kann. Alternativ oder zusätzlich kann der Vorschubweg der Inspektionseinheit auch durch Messung der Länge eines hinter dem Inspektionsgerätes hergezogenen Kabels und/oder eines vorgeschobenen Schiebestabes erfasst werden.

In einer bevorzugten Ausgestaltung der Erfindung ermöglicht die beschriebene Skalierung des 3D-Bildmodelles, eine Bestimmung des bei der Bewegung des Inspektionsgerätes zurückgelegten Weges auf Grundlage des skalierten 3D-Bildmodells. So kann auf eine zusätzliche Wegmessung verzichtet werden oder es kann diese Wegmessung zusätzlich überprüft werden. Der Verzicht auf eine Wegmessung mit Hilfe von Rädern oder der Länge eines Kabels ist insbesondere für fliegende Inspektionsgeräte, wie beispielsweise Drohnen vorteilhaft. Bei üblichen Drohnen erfolgt die Positionsbestimmung häufig über Satellitennavigation, wie GPS. Eine solche ist jedoch im Inneren eines Kanalbauwerkes wie z.B. eines Kanalrohres oder Schachtes nicht möglich. Hier ist die Positionsbestimmung allein anhand eines 3D-Bildmodells, welches von Kameras aufgenommen wird, von großem Vorteil. Hierzu kann besonders bevorzugt die Bildauswertung bzw. Bildrekonstruktion direkt während der Bewegung des Inspektionsgerätes, vorzugsweise im Wesentlichen in Echtzeit erfolgen, sodass das 3D-Bildmodell während der Bewegung zur Orientierung und Positionierung des Inspektionsgerätes genutzt werden kann. Die Bildauswertung kann dabei in einem hierfür geeigneten Computersystem direkt in dem Inspektionsgerät erfolgen oder auch extern in einem mit dem Inspektionsgerät verbundenen Computersystem, wobei dies über eine Kabelverbindung oder auch eine drahtlose Verbindung, beispielsweise Funkverbindung erfolgen kann.

Neben dem vorangehend beschriebenen Verfahren ist Gegenstand der Erfindung ein Kanalbauwerkinspektionssystem, vorzugsweise ein Kanalbauwerkinspektionssystem, welches dazu ausgebildet ist, ein Verfahren, wie es vorangehend beschrieben wurde, zur Ausführung zu bringen. In diesem Sinne ist zu verstehen, dass vorangehend beschriebene bevorzugte Ausgestaltungen des erfindungsgemäßen Verfahrens ebenfalls als bevorzugte Ausführungsformen des Kanalbauwerkinspektionssystems anzusehen sind. Umgekehrt sind nachfolgend beschriebene Verfahrensaspekte ebenfalls als bevorzugte Ausgestaltungen des vorangehend beschriebenen Verfahrens anzusehen.

Das erfindungsgemäße Kanalbauwerkinspektionssystem weist zumindest ein Inspektionsgerät mit zumindest einer und vorzugsweise zwei Kameras auf, welche ausgebildet ist bzw. ausgebildet sind, Bilder in zumindest zwei Kameraposen mit voneinander abgewandten Blickrichtungen aufzunehmen. Hierzu kann eine an einer Schwenkmechanik angeordnete Kamera verwendet werden, welche zwischen den beiden Kameraposen verschwenkt. Alternativ können zwei Kameras vorhanden sein, welche die verschiedenen Kameraposen definieren. Die unterschiedlichen Blickrichtungen in den beiden Kameraposen bedeuten, dass die zentralen optischen Achsen der Blickwinkel in den beiden Kameraposen gewinkelt zueinander angeordnet sind, vorzugsweise in einem Winkel von 180 Grad, sodass die Blickrichtungen entgegengesetzt gerichtet sind. Wie oben beschrieben weist die Kamera bzw. weisen die Kameras bevorzugt Fisheye-Objektive mit einem Blickwinkel von mindestens 180 Grad auf, sodass insgesamt ein 360 Grad-Blickwinkel mit beiden Kameras erreicht werden kann. Das Inspektionsgerät weist eine Vorschubeinrichtung auf bzw. ist mit einer Vorschubeinrichtung verbunden, welche dazu ausgebildet ist, das Inspektionsgerät durch ein Kanalbauwerk, wie z.B. ein Kanalrohr oder einen Schacht, zu bewegen. Die Vorschubeinrichtung kann von angetriebenen Rädern eines Fahrwagens gebildet werden, beispielsweise ein Schiebestab sein oder auch beispielsweise von Rotoren oder Propellern eines schwimmenden, fliegenden oder schwebenden Inspektionsgerätes gebildet sein. Die Vorschubeinrichtung ist bevorzugt so ausgebildet, dass das Inspektionsgerät definiert durch das Kanalbauwerk bewegt werden kann, insbesondere mit einer definierten und vorzugsweise konstanten Geschwindigkeit. Vorzugsweise kann auch eine Geschwindigkeitsmessung erfolgen, um eine genauere Positionsbestimmung und gleichmäßige Verteilung von aufgenommenen Bildern im Kanalbauwerk zu realisieren.

Das Inspektionsgerät weist ferner eine Steuereinrichtung auf, welche in das Inspektionsgerät integriert sein kann oder mit dem Inspektionsgerät in geeigneter Weise, beispielsweise über Kabel oder auch kabellos verbunden sein kann. Die Steuereinrichtung ist derart ausgebildet, dass sie die Kamera oder die Kameras veranlasst, bei bzw. während der Bewegung des Inspektionsgerätes in Intervallen, d.h. zeitlichen und/oder räumlichen Intervallen, Bilder aufzunehmen. Die Intervalle sind dabei bevorzugt regelmäßig, sodass bei einer Bewegung des Inspektionsgerätes mit im Wesentlichen konstanter Geschwindigkeit die Bilder auch in regelmäßigen Abständen im Kanalbauwerk aufgenommen werden. So kann beispielsweise ein Intervall so gewählt werden, dass im Wesentlichen beispielsweise alle 2,5 oder 5 cm während der Bewegung ein Bild aufgenommen wird. Dies kann durch Längenmessung erfolgen oder durch Definition zeitlicher Intervalle bei im Wesentlichen konstanter Bewegung. Auch wäre es möglich, anstelle von Einzelbildern ein Video aufzunehmen, welches wiederrum eine Vielzahl von in Intervallen aufgenommenen Einzelbildern umfasst. Die Anzahl der aufgenommenen Bilder und deren Abstände wird so gewählt, dass im Anschluss eine ausreichende Anzahl von Bildern vorliegt, um eine möglichst detaillierte 3D-Rekonstruktion zur Erzeugung eines virtuellen 3D-Bildmodelles vorzunehmen zu können. Zum Ausführen der 3D-Rekonstruktion weist das Kanalbauwerkinspektionssystem eine Bildauswerteeinrichtung bzw. Bildverarbeitungseinrichtung auf, welche in die Steuereinrichtung integriert sein kann, aber ggf. auch ein zusätzliches Computersystem sein kann bzw. auf einem zusätzlichen Computersystem zur Ausführung gebracht wird. Dabei kann die Bildauswerteeinrichtung in das Inspektionsgerät integriert sein, aber auch extern zu dem Inspektionsgerät angeordnet sein. Die von dem Inspektionsgerät bzw. dessen Kamera oder Kameras aufgenommenen Bilder werden dann zu der Bildauswerteeinrichtung übertragen. Dies kann live bzw. in Echtzeit unmittelbar nach der Aufnahme erfolgen. Alternativ oder zusätzlich können die Bilder aber auch gespeichert werden, insbesondere im Inspektionsgerät gespeichert werden und nachträglich ausgelesen werden, sodass die 3D-Rekonstruktion im Anschluss an zumindest eine Durchfahrt des Inspektionsgerätes durch das Kanalbauwerk vorgenommen wird. Wenn die Bildübertragung unmittelbar erfolgt und/oder die Bildauswerteeinrichtung in das Inspektionsgerät integriert ist, kann die 3D-Rekonstruktion auch unmittelbar nach Aufnahme der Bilder erfolgen, sodass das 3D-Bildmodell im Wesentlichen in Echtzeit erstellt werden kann. Dies ist abhängig von der zur Verfügung stehenden Rechenleistung. Die Bildauswerteeinrichtung ist derart ausgebildet, dass sie aus den aufgenommenen Bildern ein 3D-Bildmodell des Kanalbauwerkes, wie z.B. eines Kanalrohres oder Schachtes rekonstruiert. Dieses 3D-Bildmodell kann dann später zur detaillierten Analyse betrachtet werden oder auch weiteren automatischen Analysen zugrunde gelegt werden.

Erfindungsgemäß ist die Bildauswerteeinrichtung derart ausgebildet, dass das 3D-Bildmodell auf Grundlage eines vorbekannten Abstandes zwischen den beiden Kameraposen oder Kameras skaliert wird. Dies kann in der Weise erfolgen, wie es oben anhand des Verfahrens beschrieben wurde. Der vorbestimmte Abstand zwischen den Kameraposen ergibt sich aus dem Aufbau des Inspektionsgerätes, z.B. durch den festen Abstand zweier Kameras zueinander oder den Aufbau einer Schwenkeinrichtung für eine einzelne Kamera, und kann ggf. nach der Montage des Inspektionsgerätes genau vermessen werden und der Bildauswerteeinrichtung als vorgegebener Wert eingegeben werden.

Besonders bevorzugt sind die Steuereinrichtung und die Kamera oder Kameras derart ausgebildet, dass sie eine zeitgleiche Bildaufnahme durch beide Kameras oder eine Bildaufnahme zu unterschiedlichen Zeitpunkten bei Stillstand des Inspektionsgerätes veranlassen. Dies bedeutet, wenn eine Kamera ein Bild aufnimmt, nimmt zeitgleich die andere Kamera ebenfalls ein Bild auf, oder eine einzlene Kamera nimmt ein erstes Bild in einer ersten Kamerapose auf, wird dann in die zweite Kamerapose verschwenkt und nimmt ein zweites Bild auf, ohne dass sich das Inspektionsgerät dabei bewegt. Die zeitgleiche Aufnahme oder Aufnahme an derselben Position des Inspektionsgerätes wird dabei in den Bildinformationen vorzugsweise durch entsprechende Zeitstempel dokumentiert, sodass es bei der späteren Bildauswertung bzw. 3D-Rekonstruktion erkennbar ist, dass es sich um zeit- oder positionsgleich aufgenommene Bilder handelt. Für diese beiden aufgenommenen Bilder ist dann der Kameraabstand durch die baulichen Gegebenheiten des Inspektionsgerätes und ggf. die genaue Vermessung des Inspektionsgerätes vorbekannt, sodass dieses Maß dann bei der Rekonstruktion der Skalierung als bekanntes absolutes Maß zugrunde gelegt werden kann.

Gemäß einer weiteren möglichen Ausführungsform kann das Kanalbauwerkinspektionssystem zumindest einen Lagesensor aufweisen, besonders bevorzugt einen in das Inspektionsgerät integrierten Lagesensor, welcher dazu ausgebildet ist, eine Winkellage der Blickrichtung, d.h. der zentralen optischen Achse der Blickrichtung zumindest einer der Kameraposen bei der Bildaufnahme zu erfassen und vorzugsweise gemeinsam mit den Bildinformationen zu speichern bzw. zu dokumentieren. So wird die erfasste Winkellage dem Bild zugehörig gespeichert. Die Bildauswerteeinrichtung ist vorzugsweise so ausgestaltet, dass sie die erfasste Winkellage beim Erstellen des 3D-Bildmodells berücksichtigt. Die Winkellage kann die Winkellage der optischen Achsen der Kameraposen zueinander definieren aber alternativ oder zusätzlich auch die absolute Winkellage im Raum oder Änderungen der Winkellage im Raum, welche sich beim Vorschub des Inspektionsgerätes einstellen.

Die Bildauswerteeinrichtung weist beispielsweise eine Strukturerkennungsfunktion auf, welche derart ausgebildet ist, dass sie in den aufgenommenen Bildern korrespondierende Bildpunkte oder Bildinhalte auffindet und erkennt. Insbesondere ist die Strukturerkennungsfunkton so ausgebildet, dass sie in mehreren aufgenommenen Bildern identische Bildpunkte oder Bildinhalte, d.h. korrespondierende Bildinhalte oder Bildpunkte wiedererkennt und die Bilder so einander zuordnen und richtig aneinander anschließend anordnen kann. Die Bildauswerteeinrichtung ist dazu weiter bevorzugt so ausgebildet, dass sie die Bilder anhand dieser erkannten bzw. wieder erkannten Bildpunkte oder Bildinhalte zu dem 3D-Bildmodell zusammenfügt.

Wie bereits oben anhand des Verfahrens detailliert beschrieben, kann das Kanalbauwerkinspektionssystem in einer weiteren Ausgestaltung ein Wegmesssystem aufweisen, welches einen von dem Inspektionsgerät zurückgelegten Weg erfasst, wobei die Bildauswerteeinrichtung bevorzugt so ausgebildet ist, dass der erfasste Weg bei der Skalierung des 3D-Bildmodells berücksichtigt wird. Das Wegmesssystem kann in einer der oben beschriebenen Weise ausgebildet sein.

Die Bildauswerteeinrichtung ist besonders bevorzugt so ausgebildet, dass sie bei der Skalierung eine in den Bildern ermittelte Wolke von Bildpunkten und insbesondere deren geometrische Beziehung zueinander so skaliert, dass ein sich aus dieser Wolke von Bildpunkten rechnerisch ergebender Wert für den Abstand der Kameraposen bzw. Kameras dem vorbestimmten Abstand Kameraposen, d.h. dem tatsächlichen Abstand der Kameraposen entspricht. D.h. für die geometrischen Beziehungen der einzelnen Bildinhalte bzw. Bildpunkte zueinander wird zunächst ein beliebiger, ggf. vorbestimmter Maßstab zugrunde gelegt und dann rechnerisch ermittelt, welchen absoluteren Abstand die Kameraposen für diesen Maßstab gehabt haben. Wenn der Abstand nicht dem vorgegebenen Wert entspricht, wird der Maßstab so geändert, dass der rechnerisch ermittelte Abstandswert dem tatsächlichen Abstand zwischen den Kameraposen entspricht. Auf diese Weise wird dann ein Skalierungsfaktor gefunden, auf dessen Grundlage alle geometrischen Beziehungen in ihren Absolutwerten bestimmt werden können.

Nachfolgend wird die Erfindung beispielhaft anhand der beigefügten Figuren beschrieben. In diesen zeigt:
- Figur 1: schematisch ein Kanalrohrinspektionssystem gemäß einer ersten Ausführungsform der Erfindung beim Einsatz in einem Kanalrohr,
- Figur 2: schematisch die Erstellung eines 3D-Bildmodells eines Kanalrohres,
- Figuren 3 und 4: schematisch die Skalierung eines 3D-Bildmodells, und
- Figur 5: schematisch ein Kanalrohrinspektionssystem gemäß einer zweiten Ausführungsform der Erfindung beim Einsatz in einem Kanalrohr.

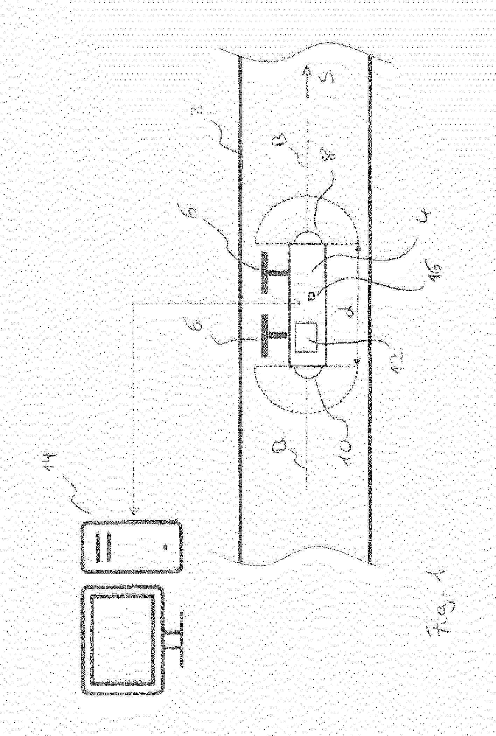

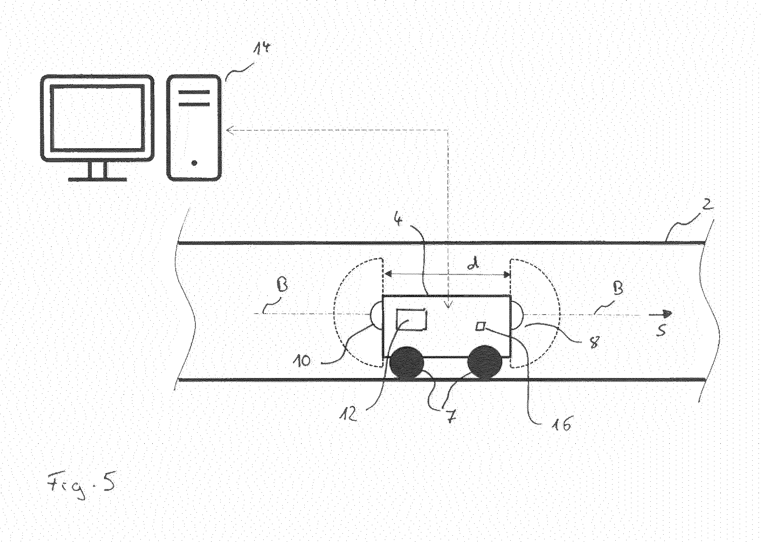

Nachfolgend wird die Erfindung beispielhaft anhand der Inspektion eines Kanalbauwerkes in Form eines Kanalrohres 2 beschrieben. Figur 1 zeigt schematisch ein Kanalrohr 2 mit einem darin angeordneten Inspektionsgerät 4. In diesem Beispiel ist das Inspektionsgerät 4 nach Art einer Drohne mit Rotoren 6 zum Schweben und zur Fortbewegung ausgebildet. Es ist jedoch zu verstehen, dass das Inspektionsgerät 4 auch in anderer Weise vorschiebbar ausgebildet sein kann, beispielsweise als Fahrwagen oder über einen Schiebestab vorschiebbar oder auch als schwimmendes Inspektionsgerät. Ein Beispiel eines Fahrwagens mit angetriebenen Rädern 7 ist in Figur 5 gezeigt. Zur Inspektion in einem Schacht könnte das Inspektionsgerät 4 auch an einem Seil hängend ausgebildet sein.

Das Inspektionsgerät 4 weist in diesem Beispiel zwei Kameras 8,10 auf, welche an seinen beiden entgegengesetzten Enden angeordnet sind. Alternativ könnte auch eine um 180° schwenkbare Kamera Verwendung finden. Die beiden Kameras 8,10 oder eine schwenkbare Kamera erlauben Bilder in zwei einander abgewandten und beanstandeten Kameraposen aufzunehmen. Die optischen Achsen B, d.h. die Mitteilachsen der Blickrichtungen der beiden Kameraposen bzw. Kameras 8 und 10 sind in dieser Anordnung gleichgerichtet, sodass die Kameras 8 und 10 zwei einander um 180 Grad abgewandte Kameraposen und Blickrichtungen definieren. Die Objektive der Kameras 8 und 10 sind jeweils als Fisheye-Objektive mit einem Bildwinkel von mindestens 180 Grad ausgebildet, sodass beide Kameras 8 und 10 zusammen ein 360 Grad-Bild erfassen. Das Inspektionsgerät 4 wird über die Rotoren 6 in der Vorschubrichtung S durch das Kanalrohr 2 bewegt. Dabei sind die optischen Achsen B in Richtung der Vorschubrichtung S gerichtet, sodass die Kamera 8 nach vorne und die Kamera 10 nach hinten schaut. Aufgrund der Baulänge des Inspektionsgerätes 4 sind die beiden Kameras 8 und 10 und damit deren Kameraposen um das Maß d beabstandet.

Das Inspektionsgerät 4 weist eine Steuereinrichtung 12 auf, welche die Bewegung entlang der Vorschubrichtung S steuern kann. Insbesondere steuert die Steuereinrichtung 12 jedoch die Kameras 8 und 10 in der Weise, dass diese jeweils zeitgleich in zeitlichen Intervallen Bilder aufnehmen. Die zeitlichen Intervalle sind vorzugsweise regelmäßig, sodass bei einer konstanten Vorschubbewegung in der Vorschubrichtung S in regelmäßigen Abständen von beiden Kameras Bilder aufgenommen werden, beispielsweise alle 2 oder 5 cm. Da die Kameras 8 und 10 jeweils gleichzeitig ein Bild aufnehmen, existieren immer zwei Bilder unterschiedlicher Kameraposen, bei welchen sich die Kameras in dem definierten Abstand d zueinander befunden haben. Dies kann bei der Skalierung ausgenutzt werden.

Die von den Kameras 8 und 10 aufgenommenen Bildern werden an ein Computersystem 14 übertragen, welches eine Bildauswerte- bzw. Bildverarbeitungseinrichtung aufweist. Das Computersystem kann ganz oder teilweise in das Inspektionsgerät 4 integriert sein oder ganz oder teilweise beabstandet zu dem Inspektionsgerät 4 angeordnet und über Kabei oder auch drahtlos mit diesem zur Kommunikation verbunden sein. Auch eine Ausgestaltung als Cloud-Computing-Lösung ist möglich. Die Datenübertragung kann in Echtzeit direkt nach der Aufnahme erfolgen. Alternativ können die Bilddaten in der Inspektionsvorrichtung 4 in einem geeigneten Speicher gespeichert werden und nach der Durchfahrt durch das Kanalrohr 2 ausgelesen und an das Computersystem 14 mit der Bildverarbeitungseinrichtung übertragen werden. Die Bildverarbeitungseinrichtung erzeugt aus der Vielzahl der von den Kameras 8 und 10 aufgenommenen Bildern ein 3D-Bildmodell in einem üblichen 3D-Rekonstruktionsverfahren. Dazu kann eine Strukturerkennungsfunktion in der Bildverarbeitungseinrichtung vorgesehen sein, welche in den aufgenommenen Bildern korrespondierende Bildpunkte bzw. Bildinformationen erkennt.

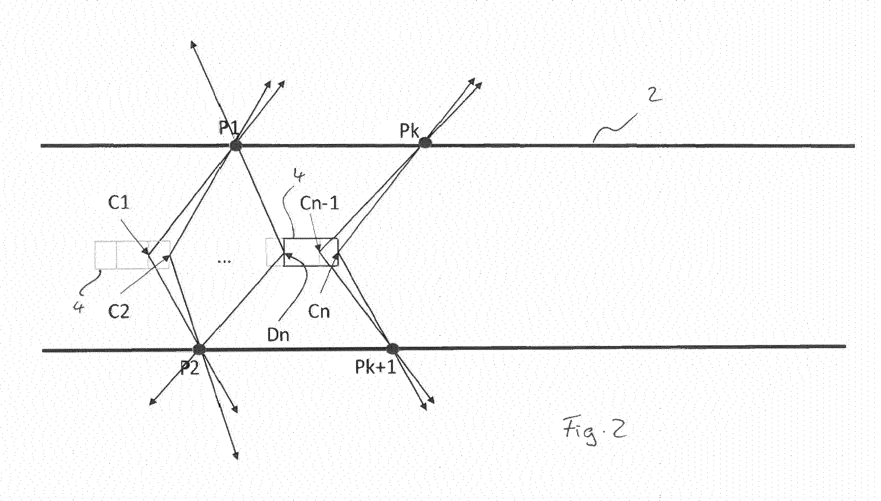

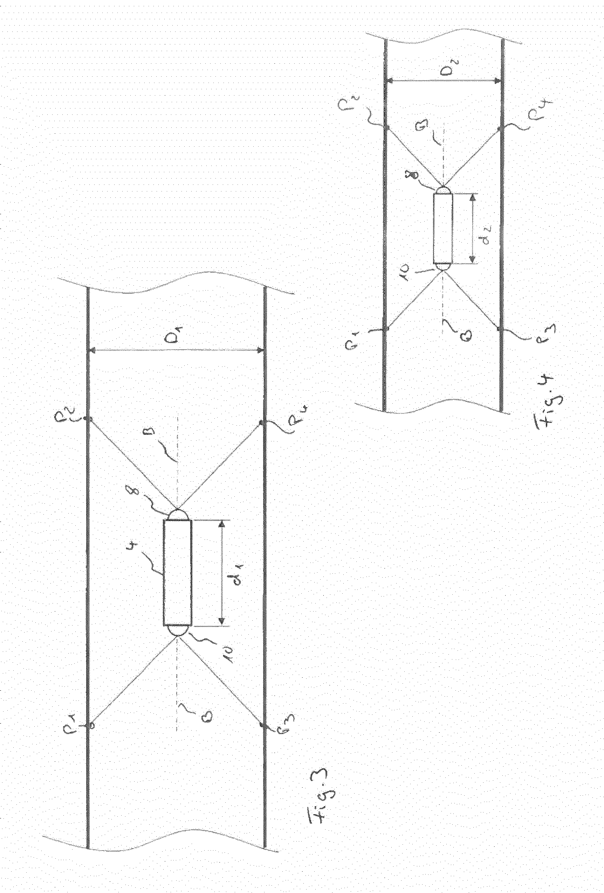

So wird eine Punktewolke aus Bildpunkten gebildet, welche in Figuren 2 als Bildpunkte P₁ bis Pₖ₊₁ und in den Figuren 3 und 4 schematisch als die Bildpunkte P₁, P₂, P₃ und P₄ gezeigt sind. Diese Bildpunkte haben eine definierte geometrische Lage, insbesondere eine definierte geometrische Beziehung zueinander. D.h. die relativen Abstände zueinander ergeben sich aus der 3D-Rekonstruktion. Zur Bestimmung der absoluten Maße ist es jedoch erforderlich, einen Maßstab zur richtigen Skalierung zu verwenden. Erfindungsgemäß wird hierzu die bekannte Länge d des Inspektionsgerätes 4, d.h. der bekannte Abstand d zwischen den Kameraposen bzw. Kameras 8 und 10 herangezogen.

Anhand von Figur 2 wird das grundsätzliche Verfahren zum Erzeugen eines 3D-Bildmodells erläutert. Von der ersten bzw. vorderen Kamera 8 wird zu einem ersten Zeitpunkt bzw. in einer ersten Position in der Kamerapose C1 ein erstes Bild aufgenommen, in welchem hier beispielhaft die Punkte P₁ und P₂ enthalten sind. Tatsächlich gibt es eine Vielzahl von Bildpunkten. Wenn das Inspektionsgerät 4 um ein bestimmtes Maß vorbewegt ist, wird in einem Intervall zu einem zweiten Zeitpunkt bzw. einer zweiten Position des Inspektionsgerätes 4 über die Kamera 8 ein weiteres Bild in der Kamerapose C2 aufgenommen. In einer aus diesem Bild erzeugten Punktewolke können durch ein geeignetes Bildauswerteverfahren die Punkte P₁ und P₂ wiedergefunden werden und durch die Triangulation können die Posen der Kameras C1 und C2, abgesehen von einem das absolute Maß bestimmenden Skalierungsfaktor, bestimmt werden. So werden bei der weiteren Bewegung des Inspektionsgerätes 4 von der ersten Kamera 8 weitere Bilder aufgenommen und Bildpunkte in dreidimensionalen Raum berechnet, indem die weiteren Kameraposen Cn mit den weiteren Bildpunkten Pk, Pk+1 bestimmt werden. Durch ein Wiederauffinden von bereits in den Bildern der ersten Kamera 8 enthaltenen Bildpunkte (hier beispielsweise P₁ und P₂) in den Bildern der zweiten Kamera 10 kann die Kamerapose Dn der zweiten, d.h. hinteren Kamera 10 in der vorhandenen Punktewolke bestimmt werden. Damit lässt sich rechnerisch der Abstand zwischen der Kamerapose Cn der vorderen Kamera 8 und der Kamerapose Dn der hinteren Kamera 10 bestimmen, d.h. es wird ein rechnerischer Abstand d₁ ermittelt. Basierend auf diesem und dem tatsächlich bekannten Abstand d zwischen den Kameras 8 und 10 lässt sich dann das gesamte 3D-Bildmodell, d.h. die gesamte dreidimensionale Punktewolke skalieren.

Die Skalierung erfolgt in der Weise, dass für die Punktewolke, wie in Figuren 3 und 4 gezeigt, zunächst ein Ausgangs-Maßstab, welches ein vorbestimmter Maßstab oder willkürlicher Maßstab sein kann, herangezogen wird. Beispielsweise wird für den Rohrdurchmesser D zunächst einmal ein beliebiges Maß, hier beispielsweise D₁=50 cm angenommen. Auf Grundlage der definierten relativen Beziehungen zueinander ergibt sich aus diesem Maß ein rechnerischer Abstand d₁ für die beiden Kameras 8 und 10, welcher sich hier beispielweise als d₁=10 cm ergibt. Wenn nun bekannt ist, dass der tatsächliche Abstand d=5 cm ist, kann das gesamte 3D-Bildmodell entsprechend skaliert werden, d.h. in diesem Beispiel um die Hälfte verkleinert werden, sodass der rechnerisch ermittelte Abstand d₂ den tatsächlichen Abstand d, in diesem Beispiel beispielsweise d₂=5 cm entspricht. Auf Grundlage der vorgegebenen bzw. in der 3D-Rekosntruktion ermittelten geometrischen Beziehungen ergibt sich dann entsprechend der tatsächliche Rohrdurchmesser D₂ zu 25 cm. D.h. erfindungsgemäß wird idealerweise als das einzige vorbekannte korrekte Maß der Abstand d zwischen den beiden Kameras 8 und 10 herangezogen und auf Grundlage dieser bekannten Größen das gesamte ermittelte 3D-Bildmodell skaliert, sodass aus diesem dann alle anderen Maße, beispielsweise Positionen von erfassten Beschädigungen, Maße von Hausanschlüssen oder Muffen ermittelt bzw. abgeleitet werden können.

Zur Position- und Lagebestimmung des Inspektionsgerätes 4 könnten weitere Sensoren verwendet werden, so beispielsweise ein Lagesensor 16, welcher die Winkellage, insbesondere die Winkellage der optischen Achsen B im Raum erfasst. Die von dem Lagesensor 16 erfassten Messwerte können gemeinsam mit den Bildern abgespeichert werden, sodass die Winkellage der optischen Achsen B bei der Aufnahme der Bilder später bei der 3D-Rekonstruktion berücksichtigt werden kann. Wenn das Inspektionsgerät 4 in einem Schiebestab vorgeschoben wird oder auf Rädern 7 fährt, wie zum Beispiel in Figur 5 gezeigt, könnte darüber hinaus eine zusätzliche Wegmessung über die Räder oder die Vorschublänge des Schiebestabes erfolgen.

### Bezugszeichenliste

- 2: Kanalrohr
- 4: Inspektionsgerät
- 6: Rotoren
- 7: Räder
- 8, 10: Kameras
- 12: Steuereinrichtung
- 14: Computersystem
- 16: Lagesensor
- S: Vorschubrichtung
- B: Blickrichtungen
- d, d₁, d₂: Abstände der Kameras 8, 10
- D₁, D₂: Rohrdurchmesser
- C1, C2, Cn-1, Cn, Dn: Kameraposen
- P₁, P₂, P₃, P₄, Pk, Pk+1: Bildpunkte

## Patentansprüche

1. Verfahren zur 3D-Rekonstruktion eines Kanalbauwerkes (2) aus aufgenommenen Bildern, bei welchem
ein Inspektionsgerät (4), welches zumindest eine Kamera (8, 10) aufweist, durch das Kanalrohr (2) oder den Schacht bewegt wird, von der zumindest einen Kamera (8, 10) in Intervallen Bilder in zumindest zwei einander abgewandten und definiert beabstandeten Kameraposen aufgenommen werden, und
aus den aufgenommen Bildern ein 3D-Bildmodell des Kanalbauwerkes (2) rekonstruiert wird,
**dadurch gekennzeichnet, dass**
das 3D-Bildmodell auf Grundlage des vorbekannten Abstandes (d) der beiden Kameraposen skaliert wird.

2. Verfahren nach Anspruch 1, **dadurch gekennzeichnet, dass** die beiden Kameraposen durch eine Kamera, die zwischen der Aufnahme der beiden Kameraposen definiert bewegt wird, oder durch zwei Kameras (8,10), welche definiert zueinander angeordnet sind, aufgenommen werden.

3. Verfahren nach Anspruch 1 oder 2, **dadurch gekennzeichnet, dass** die zentralen optischen Achsen (B) der beiden Kameraposen und vorzugsweise der beiden Kameras (8, 10) bei der Bewegung des Inspektionsgerätes (4) parallel zur Vorschubrichtung (5) gelegen sind.

4. Verfahren nach einem der vorangehenden Ansprüche, **dadurch gekennzeichnet, dass** in den Intervallen jeweils von zwei Kameras (8, 10) zeitgleich Bilder aufgenommen werden, welche die zwei unterschiedlichen Kameraposen definieren.

5. Verfahren nach einem der vorangehenden Ansprüche, **dadurch gekennzeichnet, dass** eine vorbekannte oder bei der Bildaufnahme erfasste Winkellage der zentralen optischen Achsen (B) der beiden Kameraposen bei der Skalierung berücksichtigt werden.

6. Verfahren nach einem der vorangehenden Ansprüche, **dadurch gekennzeichnet, dass** für die Rekonstruktion des 3D-Bildmodelles in den aufgenommenen Bildern korrespondierende Bildpunkte (P₁, P₂, P₃, P₄) oder Bildinhalte erfasst werden, anhand derer die Bilder zu einem 3D-Bildmodell zusammengefügt werden.

7. Verfahren nach einem der vorangehenden Ansprüche, **dadurch gekennzeichnet, dass** bei der Skalierung eine in den Bildern ermittelte Wolke von Bildpunkten (P₁, P₂, P₃, P₄) so skaliert wird, dass ein sich aus dieser Wolke von Bildpunkten (P₁, P₂, P₃, P₄) rechnerisch ergebender Wert (d₁, d₂) für den Abstand der Kameraposen (8, 10) dem vorbekannten Abstand (d) der Kameraposen entspricht.

8. Verfahren nach einem der vorangehenden Ansprüche, **dadurch gekennzeichnet, dass** das Inspektionsgerät (4) mittels angetriebener Räder bewegt wird, durch einen Schiebestad vorgeschoben wird, sich schwimmend bewegt, sich fliegend oder schwebend bewegt oder über eine Hängevorrichtung bewegt wird.

9. Verfahren nach einem der vorangehenden Ansprüche, **dadurch gekennzeichnet, dass** bei der Bewegung des Inspektionsgerätes (2) eine Wegmessung erfolgt und die über die Wegmessung bestimmte Position der zumindest einen Kamera (8, 10) im Moment der Aufnahme eines Bildes registriert und im Anschluss bei der Rekonstruktion und/oder Skalierung des 3D-Bildmodells berücksichtigt wird.

10. Verfahren nach einem der vorangehenden Ansprüche, **dadurch gekennzeichnet, dass** eine Bestimmung des bei der Bewegung des Inspektionsgerätes (4) zurückgelegten Weges auf Grundlage des skalierten 3D-Bildmodells erfolgt.

11. Kanalbauwerkinpektionssystem mit
einem Inspektionsgerät (4), welches zumindest eine Kamera (8, 10) aufweist, die ausgestaltet ist, Bilder in zumindest zwei Kameraposen mit voneinander abgewandten Blickrichtungen (B) aufzunehmen,
einer Vorschubeinrichtung (6), welche dazu ausgebildet ist, das Inspektionsgerät (4) durch ein Kanalbauwerk zu bewegen,
einer Steuereinrichtung (12), welche die zumindest eine Kamera (8, 10) veranlasst, bei der Bewegung des Inspektionsgerätes (4) in Intervallen Bilder aufzunehmen, sowie
einer Bildauswerteeinrichtung (14), welche derart ausgebildet ist, dass sie aus den aufgenommen Bildern ein 3D-Bildmodell des Kanalbauwerkes (2) rekonstruiert,
**dadurch gekennzeichnet, dass**
die Bildauswerteeinrichtung (14) derart ausgebildet ist, dass das3D-Bildmodell auf Grundlage eines vorbekannten Abstandes (d) zwischen den zwei Kameraposen (8, 10) skaliert wird.

12. Kanalbauwerkinspektionssystem nach Anspruch 11, **dadurch gekennzeichnet, dass** das Inspektionsgerät zwei Kameras (8,10) mit einander abgewandten Blickrichtungen zur Aufnahme der wie Kameraposen aufweist.

13. Kanalbauwerkinspektionssystem nach Anspruch 12, **dadurch gekennzeichnet, dass** die Steuereinrichtung (12) derart ausgebildet ist, dass sie eine zeitgleiche Bildaufnahme durch beide Kameras (8, 10) veranlasst.

14. Kanalbauwerkinspektionssystem nach einem der Ansprüche 11 bis 13, **gekennzeichnet durch** zumindest einen Lagesensor, welcher eine Winkellage der Blickrichtung (B) zumindest einer der Kameraposen (8, 10) bei der Bildaufnahme erfasst, wobei die erfasste Winkellage dem Bild zugehörig gespeichert wird und die Bildauswerteeinrichtung (14) derart ausgestaltet ist, dass sie die erfasste Winkellage beim Erstellen des 3D-Bildmodells berücksichtigt.

15. Kanalbauwerkinspektionssystem nach einem der Ansprüche 11 bis 14, **dadurch gekennzeichnet, dass** die Bildauswerteeinrichtung (14) eine Strukturerkennungsfunktion aufweist, welche derart ausgebildet ist, dass sie in den aufgenommenen Bildern korrespondierende Bildpunkte (P₁, P₂, P₃, P₄) oder Bildinhalte erkennt, und derart ausgebildet ist, dass sie die Bilder anhand der erkannten Bildpunkte (P₁, P₂, P₃, P₄) oder Bildinhalte zu einem 3D-Bildmodell zusammenfügt.

16. Kanalbauwerkinspektionssystem nach einem der Ansprüche 11 bis 15, **gekennzeichnet durch** ein Wegmesssystem, welches einen von dem Inspektionsgerät (4) zurückgelegten Weg erfasst, wobei die Bildauswerteeinrichtung (14) bevorzugt derart ausgebildet ist, dass der erfasste Weg bei der Skalierung des 3D-Bildmodells berücksichtigt wird.

17. Kanalbauwerkinspektionssystem nach einem der Ansprüche 11 bis 16, **dadurch gekennzeichnet, dass** die Bildauswerteeinrichtung (14) derart ausgebildet ist, dass sie bei der Skalierung eine in den Bildern ermittelte Wolke von Bildpunkten (P₁, P₂, P₃, P₄) so skaliert, dass ein sich aus dieser Wolke von Bildpunkten (P₁, P₂, P₃, P₄) rechnerisch ergebender Wert (d₁, d₂) für den Abstand (d) der Kameraposen (8, 10) dem vorbekannten Abstand der Kameraposen entspricht.
